# EUROPÄISCHE PATENTSCHRIFT

(11) **EP 1 615 796 B1**
(45) Veröffentlichungstag und Bekanntmachung des Hinweises auf die Patenterteilung: **20.02.2008**
(21) Anmeldenummer: 04719921.1
(22) Anmeldetag: 12.03.2004
(51) Int. Cl.: B60N 2/20

(54) **KRAFTFAHRZEUGSITZ**
MOTOR VEHICLE SEAT
SIEGE DE VEHICULE

(30) Priorität: 10.04.2003 DE 10317238
(43) Veröffentlichungstag der Anmeldung: 18.01.2006
(73) Patentinhaber: Brose Fahrzeugteile GmbH & Co. KG, Coburg, 96450 Coburg (DE)
(72) Erfinder: FISCHER, Matthias, 96317 Kronach (DE); HOFMANN, Jochen, 98257 Marktgraitz (DE)
(74) Vertreter: Baumgärtel, Gunnar
(86) Internationale Anmeldenummer: PCT/DE2004/000560
(87) Internationale Veröffentlichungsnummer: WO 2004/091963

(56) Entgegenhaltungen:
- DE-A- 10 023 525
- DE-A- 10 034 510
- DE-A- 10 246 473
- DE-C- 10 109 397
- FR-A- 2 781 435
- FR-A- 2 800 021

## Beschreibung

Die Erfindung betrifft einen Kraftfahrzeugsitz nach dem Oberbegriff des Patentanspruchs 1.

Ein derartiger Kraftfahrzeugsitz umfasst eine Rückenlehne, die aus mindestens einer Gebrauchsposition heraus, in der sie zum Abstützen des Rückens eines Fahrzeuginsassen dient, durch Verschwenken auf eine Sitzfläche des Sitzuntergestells des Kraftfahrzeugsitzes vorklappbar ist; einen Polsterträger, der zur Aufnahme eines Sitzpolsters dient, das die vorgenannte Sitzfläche definiert und auf dem ein Sitzbenutzter sitzen kann; sowie ein Koppelglied, über das die Rückenlehne derart mit dem Polsterträger gekoppelt ist, dass dieser beim Vorklappen der Rückenlehne z.B. abgesenkt und/oder in Sitzlängsrichtung bewegt wird. Unter der Sitzlängsrichtung wird dabei diejenige Richtung verstanden, entlang der sich die Oberschenkel eines in normaler Sitzposition auf dem Fahrzeugsitz sitzenden Insassen erstrecken.

Unter einer Gebrauchsposition der Rückenlehne werden vorliegend all diejenigen Positionen der Rückenlehne verstanden, in denen diese verriegelbar ist und zum Abstützen des Rückens eines Sitzbenutzers dient. Hierbei kann es sich um eine einzelne Gebrauchsposition mit im wesentlichen aufrechter Rückenlehne handeln (bei einem Kraftfahrzeugsitz, mit einer nicht einstellbaren Lehnenneigung) oder um eine Mehrzahl unterschiedlicher Gebrauchspositionen (bei einem Kraftfahrzeugsitz, der eine in ihrer Neigung verstellbare Rückenlehne aufweist). Im letztgenannten Fall besteht neben der Verriegelung der Rückenlehne in einer im wesentlichen aufrechten Gebrauchsposition in der Regel die Möglichkeit, die Rückenlehne in unterschiedlichen nach hinten geneigten Positionen zu verriegeln, so dass der Sitz auch als Liegesitz dienen kann.

Wird die Rückenlehne aus dieser Gebrauchspositionen heraus in Richtung auf die Sitzfläche vorgeklappt, so dient sie nicht mehr zum Abstützen des Rückens eines Fahrzeuginsassen; vielmehr ist die Benutzung des entsprechenden Sitzes durch einen Fahrzeuginsassen in dieser Position der Rückenlehne gar nicht möglich, da die Rückenlehne die Sitzfläche überdeckt. Bei vorgeklappter Rückenlehne wird zusätzlicher Transportraum für den Transport von Gegenständen in dem Fahrzeug zur Verfügung gestellt.

Das Verschwenken bzw. Vorklappen der Rückenlehne aus einer Gebrauchsposition heraus auf die Sitzfläche des Kraftfahrzeugs bedeutet dabei nicht, dass die Rückenlehne (mit ihrem Lehnenpolster) zwingend auf der (durch ein Sitzpolster gebildeten) Sitzfläche des Kraftfahrzeugsitzes aufliegen müsste. Von Bedeutung ist vielmehr, dass sich die Rückenlehne im vorgeklappten Zustand oberhalb des Polsterträgers erstreckt (und diesen hierbei überdeckt), so dass oberhalb der vorgeklappten Rückenlehne der gewünschte zusätzliche Transportraum vorliegt. Dieser Transportraum wird maximiert, wenn die Rückenlehne im vorgeklappten Zustand auf der Sitzfläche (zumindest teilweise) aufliegt; jedoch kann ein erheblicher zusätzlicher Transportraum oberhalb der Rückenlehne auch bereits dann zur Verfügung gestellt werden, wenn die Rückenlehne im vorgeklappten Zustand von der (durch das Sitzpolster gebildeten) Sitzfläche beabstandet ist und sich in einem bestimmten Abstand oberhalb dieser erstreckt. Dabei ist die Rückenlehne bevorzugt im wesentlichen horizontal ausgerichtet, und sie erstreckt sich im wesentlichen parallel oder allenfalls leicht geneigt bezüglich der Sitzfläche.

Durch die Kopplung der Rückenlehne mit dem Polsterträger des Fahrzeugsitzes über ein Koppelglied erfolgt beim Vorklappen der Rückenlehne auf die Sitzfläche eine Verlagerung des Polsterträgers in vertikaler Richtung nach unten und/oder in Sitzlängsrichtung nach vorne oder hinten. Hierdurch kann der beim Vorklappen der Rückenlehne zur Verfügung stellbare zusätzliche Transportraum optimiert werden.

Bei derartigen Kraftfahrzeugsitzen besteht die Schwierigkeit, dass durch die Kopplung der Rückenlehne mit dem Polsterträger bereits eine begrenzte Bewegung der Rückenlehne aus einer Gebrauchsposition heraus zu einer Verlagerung des Polsterträgers führen kann. Dies ist beispielsweise dann nachteilig, wenn die Rückenlehne innerhalb eines Gebrauchsbereiches durch Verschwenken in unterschiedliche Gebrauchspositionen einstellbar sein soll.

Aus der DE 203 047 13 U ist ein Kraftfahrzeugsitz entsprechend dem Oberbegriff des Anspruchs 1 bekannt.

Der Erfindung liegt daher das Problem zugrunde, einen Kraftfahrzeugsitz der eingangs genannten Art zu schaffen, der ein begrenztes Verschwenken der Rückenlehne ermöglicht, ohne dass es zu einer Verlagerung des Polsterträgers des Kraftfahrzeugsitzes kommt.

Dieses Problem wird erfindungsgemäß durch die Schaffung eines Kraftfahrzeugsitzes mit den Merkmalen des Patentanspruchs 1 gelöst.

Danach steht das Koppelglied mit mindestens einem elastischen Element derart in Wirkverbindung, z.B. durch federnde Lagerung des Koppelgliedes mittels des elastischen Elementes, dass bei einem Vorklappen der Rückenlehne (in einem ersten Schwenkbereich) zunächst das elastische Element deformiert wird, bevor das Koppelglied (in einem anschließenden, weiteren Schwenkbereich der Rückenlehne) auf den Polsterträger einwirken kann, um diesen zu verlagern. D.h., das Deformieren des elastischen Elementes beim anfänglichen Verschwenken der Rückenlehne aus einer Gebrauchsposition heraus führt dazu, dass bei dem Verschwenken der Rückenlehne in dem ersten Schwenkbereich das Koppelglied nicht (zur Verlagerung des Polsterträgers) auf den Polsterträger einwirkt.

Dies ermöglicht ein begrenztes Verschwenken der Rückenlehne bezüglich ihrer mindestens einen Gebrauchsposition, ohne dass das Koppelglied in diesem ersten Schwenkbereich zur Verlagerung des Polsterträgers aktiviert wird. Vielmehr findet in einem begrenzten Schwenkbereich der Rückenlehne aus der mindestens einen Gebrauchsposition bzw. einem durch unterschiedliche Gebrauchspositionen definierten Gebrauchsbereich heraus zunächst nur eine Deformation des elastischen Elementes statt, so dass die Lage des Polsterträgers nicht beeinflusst wird. Erst wenn die Deformation des elastischen Elementes abgeschlossen ist, dieses also so weit deformiert ist, dass mit den beim Vorklappen der Rückenlehne wirkenden Kräften keine weitere Deformation möglich ist, führt das Vorklappen der Rückenlehne zu einer Betätigung des Koppelgliedes, welches dann die gewünschte Verlagerung des Polsterträgers auslösen kann.

Hinsichtlich unterschiedlicher Möglichkeiten zur Kopplung einer vorklappbaren Rückenlehne an einen Polsterträger, um beim Vorklappen der Rückenlehne eine Verlagerung des Polsterträgers zu erreichen, wird auf die DE 203 03 753 und die DE 203 04 713 verwiesen. Hinsichtlich einer zusätzlichen Verlagerung der Rückenlehne selbst beim Vorklappen wird neben der DE 203 03 753 noch auf die DE 102 46 473 verwiesen.

Das Koppelglied ist vorzugsweise längserstreckt ausgebildet, z. B. in Form eines Druck- oder Zugmittels, insbesondere als flexibles Zugmittel (Zugseil), an dessen einem Ende das elastische Element angeordnet ist. Das längserstreckte Koppelglied kann dabei zumindest abschnittsweise in einer Bowdenhüllen geführt sein.

Das elastische Element wird vorzugsweise derart angeordnet, dass das Koppelglied über das elastische Element mit der Rückenlehne in Verbindung steht, insbesondere dadurch, dass sich das elastische Element unmittelbar oder mittelbar über ein weiteres Bauteil, wie z.B. ein drehbar an der Rückenlehne angeordnetes Stützelement, an der Rückenlehne abstützt. Hierzu kann vorgesehen sein, dass das elastische Element an einem Ende mit dem Koppelglied verbunden ist und sich mit dem anderen Ende an der Rückenlehne abstützt, so dass beim Vorklappen der Rückenlehne zunächst das elastische Element deformiert wird, bevor die Rückenlehne über das Koppelglied auf den Polsterträger einwirken kann.

Bei einem als flexibles Zugmittel ausgebildeten Koppelglied erfolgt etwa bei einer Straffung des Zugmittels durch das Vorklappen der Rückenlehne zunächst eine Deformation des elastischen Elementes. Erst wenn diese abgeschlossen ist, kann durch die Straffung des Zugmittels eine Verlagerung des Polsterträgers ausgelöst werden.

Hierbei ist das elastische Element vorzugsweise als Schraubenfeder, z. B. in Form einer Zug- oder einer Druckfeder ausgebildet, die den lehnenseitigen Endabschnitt des Koppelgliedes umschließt.

Mit seinem der Rückenlehne abgewandten Ende greift das Koppelglied wiederum unmittelbar oder mittelbar über weitere Bauteile an den Polsterträger an, und zwar insbesondere im Bereich von dessen in Sitzlängsrichtung vorderem Ende.

Gemäß einer Weiterbildung der Erfindung ist ein Verriegelungsmechanismus vorgesehen, mit dem der Polsterträger derart verriegelbar ist, dass er: nicht verlagert werden kann, und der vorzugsweise in Richtung auf den verriegelten Zustand elastisch vorgespannt ist. Zur Verlagerung des Polsterträgers beim Vorklappen der Rückenlehne auf die Sitzfläche muss dann dieser Verriegelungsmechanismus zunächst entriegelt werden, und zwar vorzugsweise erst nach der Deformation des elastischen Elementes, das zur federnden Lagerung des Koppelgliedes dient.

Zur Entriegelung des Verriegelungsmechanismus kann eine mit dem Koppelglied in Wirkverbindung stehende Baugruppe, wie z. B. eine Bowdenhülle des längserstreckten Koppelgliedes, dienen. Bei Verwendung eines flexiblen Zugmittels als Koppelglied lässt sich eine entsprechende Betätigung der Bowdenhülle bei einer Straffung des Zugmittels beim Vorklappen der Rückenlehne (nach der Deformation des elastischen Elementes) dadurch erreichen, dass eine Bewegung des Zugmittels durch die Verriegelung des Polsterträgers zunächst verhindert wird. Daher führt die nach Deformation des elastischen Elementes einsetzende Straffung des Zugmittels zunächst nur zu einer Verschiebung der Bowdenhülle, die dann über ein entsprechendes Entriegelungselement auf den Verriegelungsmechanismus des Polsterträgers einwirkt.

Hierzu kann vorgesehen sein, dass sich die Bowdenhülle einerseits an dem Entriegelungselement des Verriegelungsmechanismus und andererseits an einem sitzgestellfesten Träger der Rückenlehne abstützt, und zwar vorzugsweise jeweils über ein drehbar gelagertes Stützelement. Die zum Abstützen des elastischen Elementes bzw. der Bowdenhülle verwendeten drehbar gelagerten Stützelemente können jeweils eine Durchgangsöffnung aufweisen, die von dem längserstreckten Koppelglied durchgriffen wird.

Nach der Entriegelung des Verriegelungsmechanismus mittels des Bowdenzugs kann eine Bewegung des sich beim Vorklappen der Rückenlehne straffenden Zugmittels erfolgen, wobei dieses die gewünschte Verlagerung des Polsterträgers bewirkt.

Um die Verlagerung des Polsterträgers beim Vorklappen der Rückenlehne zu ermöglichen, kann dieser beispielsweise über einen Schwenkhebel mit einer Bodenbaugruppe eines Kraftfahrzeugs verbindbar sein. Darüber hinaus kann dem Polsterträger eine Führungseinrichtung in Form einer Führungskulisse und eines darin geführten Führungsbolzens zugeordnet sein, mittels der der Polsterträger bei seiner Verlagerung geführt wird.

Eine Verriegelung des Polsterträgers bei in Gebrauchsposition befindlicher Rückenlehne kann dann dadurch erreicht werden, dass ein Verriegelungselement des Verriegelungsmechanismus, z. B. ein schwenkbar gelagerter Verriegelungshebel, auf den Führungsbolzen dieser Führungseinrichtung einwirkt und dessen Bewegung in der Führungskulisse verhindert. Zur Entriegelung des Verriegelungsmechanismus muss dieser Hebel dann beim Vorklappen der Rückenlehne derart verschwenkt werden, dass er die Führungseinrichtung freigibt.

Um das Vorklappen der Rückenlehne auf die Sitzfläche sowie ggf. ein Verschwenken der Rückenlehne zwischen verschiedenen Gebrauchspositionen zu ermöglichen, ist diese vorzugsweise um eine Achse verschwenkbar gelagert. Hierbei kann es sich einerseits um eine ortsfest am Lehnenträger ausgebildete Achse handeln oder alternativ um eine in einer Führungskulisse angeordnete, beim Vorklappen der Rückenlehne verlagerbare Achse. Durch eine Verlagerung der Achse der Rückenlehne beim Vorklappen kann eine Kollision der Rückenlehne mit weiteren Baugruppen des entsprechenden Kraftfahrzeugs verhindert werden. Handelt es sich bei dem entsprechenden Kraftfahrzeugsitz um einen Rücksitz, so lässt sich hierdurch beispielsweise eine Kollision mit der Rückenlehne des davor befindlichen Kraftfahrzeugsitzes beim Vorklappen vermeiden.

Sofern sich die Rückenlehne durch Verschwenken in unterschiedliche Gebrauchspositionen bringen lässt, in denen diese jeweils verriegelbar ist, so kann hierfür eine beliebige bekannte Verstelleinrichtung für die Lehnenneigung verwendet werden. Bei einer selbsthemmenden Auslegung dieser Verstelleinrichtung ist gleichzeitig gewährleistet, dass die Rückenlehne in ihrer jeweiligen Gebrauchsposition verriegelt ist. Bei einer nicht selbsthemmenden Ausbildung der Verstelleinrichtung müssen hierzu entsprechende Verriegelungsmittel vorgesehen sein. In jedem Fall wird durch die erfindungsgemäße federnde Lagerung des Koppelgliedes ermöglicht, dass sich die Rückenlehne in einem bestimmten Gebrauchsbereich in unterschiedliche Gebrauchspositionen verschwenken lässt, ohne dass es zu einer Verlagerung des Polsterträgers kommt.

Besonders bevorzugt ist eine solche Ausbildung des Kraftfahrzeugsitzes hinsichtlich der Kopplung zwischen Rückenlehne und Polsterträger, bei der bei einem Verschwenken der Rückenlehne aus einer Gebrauchsposition heraus, um die Rückenlehne auf die Sitzfläche vorzuklappen, zunächst in einem ersten Schwenkbereich eine Deformation des elastischen Elementes (durch Verspannen und/oder Entspannen) erfolgt, ohne dass das Koppelglied auf den Verriegelungsmechanismus des Polsterträgers oder den Polsterträger selbst einwirkt, um eine Entriegelung bzw. Verlagerung des Polsterträgers zu bewirken. Dieser erste Schwenkbereich (Ausgleichsbereich) ermöglicht somit eine Neigungseinstellung der Rückenlehne zwischen unterschiedlichen Gebrauchspositionen in einem Gebrauchsbereich, in dem die Verstellung der Rückenlehne keine. Einwirkung auf den Polsterträger zur Folge hat. In einem daran anschließenden zweiten Schwenkbereich (Entriegelungsbereich) der Rückenlehne erfolgt dann bei einem weiteren Vorklappen der Rückenlehne die Entriegelung des Verriegelungsmechanismus des Polsterträgers. In einem dritten Schwenkbereich, der an den vorgenannten zweiten Schwenkbereich anschließt und als Verlagerungsbereich dient; wird dann beim weiteren Vorklappen der Rückenlehne der Polsterträger durch Einwirkung des Koppelgliedes in der gewünschten Weise verlagert, also insbesondere abgesenkt und/oder in Sitzlängsrichtung verschoben.

Weitere Merkmale und Vorteile der Erfindung werden bei der nachfolgenden Beschreibung eines Ausführungsbeispiels anhand der Figuren deutlich werden.

Es zeigen:
- Fig. 1a: einen Kraftfahrzeugsitz mit hochgeklappter, in einer Gebrauchsposition befindlicher Rückenlehne in perspektivischer Darstellung;
- Fig. 1b: eine Seitenansicht des Kraftfahrzeugsitzes aus Figur 1a;
- Fig. 1c: einen Ausschnitt des Kraftfahrzeugsitzes aus den Figuren 1a und 1b im Bereich des Lehnenträgers;
- Fig. 1d: eine vergrößerte Darstellung eines Stützbolzens aus Figur 1c;
- Fig. 2: den Kraftfahrzeugsitz aus den Figuren 1a und 1b beim Vorklappen der Rückenlehne in Richtung auf die Sitzfläche;
- Fig. 3: den Kraftfahrzeugsitz aus den Figuren 1a und 1b nach dem Vorklappen auf die Sitzfläche.

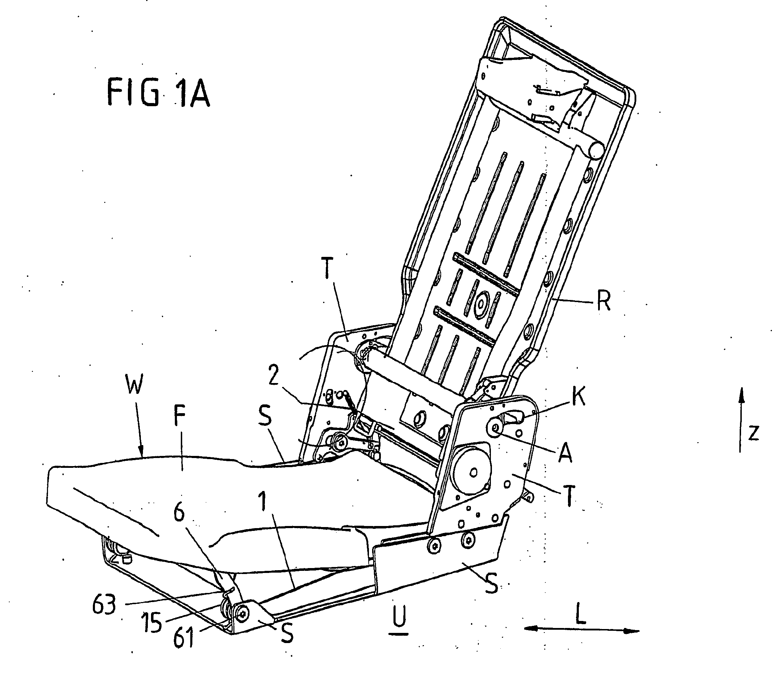

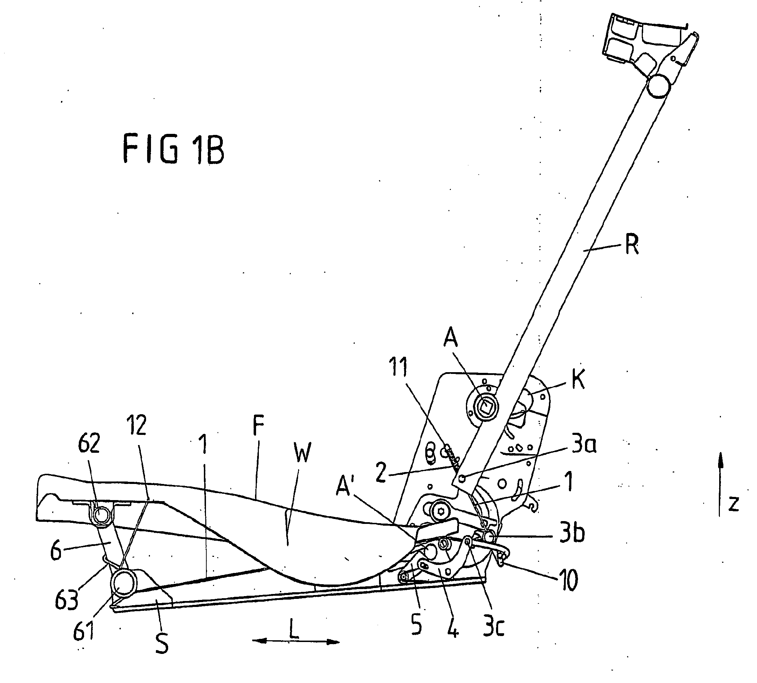

In den Figuren 1a und 1b ist ein Kraftfahrzeugsitz dargestellt, der ein Sitzuntergestell U sowie eine Rückenlehne R aufweist. Das Sitzuntergestell U wird gebildet durch zwei an den beiden Längsseiten des Kraftfahrzeugsitzes angeordnete, sich in Sitzlängsrichtung L erstreckende Sitzseitenteile S, die jeweils karosseriefest am Boden eines Kraftfahrzeugs anzuordnen sind und an denen eine Sitzwanne W schwenkbar gelagert ist. Die Sitzwanne W dient als Polsterträger zur Aufnahme eines Sitzpolsters und definiert so die Sitzfläche F des Kraftfahrzeugsitzes, auf der ein Fahrzeuginsasse Platz nehmen kann. Die Rückenlehne R ist um eine Achse A verschwenkbar an zwei Lehnenträgern T in Form von Lehnenbeschlägen gelagert, die an je einer Längsseite des Kraftfahrzeugsitzes gemeinsam mit dem entsprechenden Sitzseitenteil S karosseriefest anzuordnen sind.

Anhand der Figuren 1a und 1b wird deutlich, dass die durch eine Lagerwelle der Rückenlehne R definierte Schwenkachse A in einer Kulissenführung K geführt ist, so dass sich die Schwenkachse A bei einer Schwenkbewegung der Rückenlehne R entlang der Führungskulisse K bewegen kann.

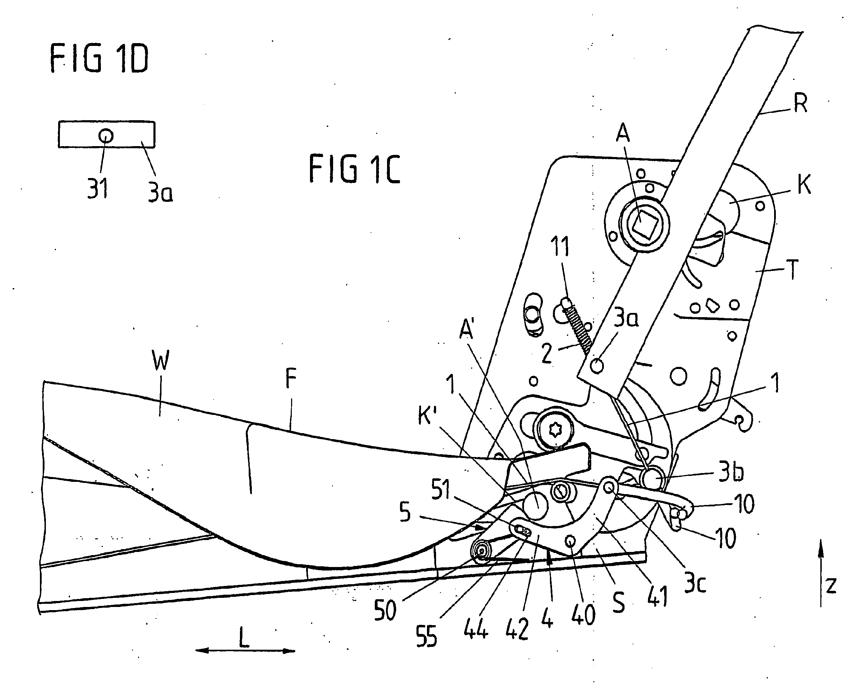

Anhand der vergrößerten Darstellung des eines Teiles des Kraftfahrzeugsitzes in Figur 1c ist erkennbar, dass die Sitzwanne W im Bereich des in Sitzlängsrichtung L hinteren Endes des Kraftfahrzeugsitzes, d.h. desjenigen Endes, an dem die Rückenlehne R von dem Sitzuntergestell U absteht, mittels einer Schwenkachse A' verschwenkbar an dem Sitzseitenteil S angelenkt ist. Die Schwenkachse A' ist in einer im Sitzseitenteil S ausgebildeten Kulissenführung K' geführt, die sich in Sitzlängsrichtung erstreckt und dabei in Vorwärtsrichtung nach unten geneigt ist.

Im Bereich des in Sitzlängsrichtung L vorderen Endes des Sitzuntergestells U, d. h. im Bereich des von der Rückenlehne R beabstandeten Endes des Sitzuntergestells U, ist die Sitzwanne W mittels eines Schwenkhebels 6 mit dem Sitzseitenteil S verbunden. Der Schwenkhebel 6 ist dabei um eine erste Achse 61 verschwenkbar am Sitzseitenteil S und um eine zweite Achse 62 verschwenkbar an der Sitzwanne W angelenkt. Mittels einer Feder 63 ist der Schwenkhebel 6 in Richtung auf eine aufrechte Position vorgespannt, so dass die Sitzwanne W in vertikaler Richtung z (im wesentlichen senkrecht zur Sitzfläche F) angehoben ist.

Die Rückenlehne R des in den Figuren 1a bis 1c dargestellten Kraftfahrzeugsitzes lässt sich in Richtung auf die Sitzfläche F des Sitzuntergestells U vorklappen, z. B. um zusätzlichen Transport- und Stauraum im Fahrzeug zur Verfügung zu stellen, wenn der entsprechende Fahrzeugsitz nicht für einen Fahrzeuginsassen benötigt wird. Bei diesem Vorklappen der Rückenlehne R in Richtung auf die Sitzfläche F wird die Schwenkachse A der Rückenlehne R in der zugeordneten Führungskulisse K bewegt, und zwar zunächst in Sitzlängsrichtung L nach hinten, wodurch beim Vorklappen der Rückenlehne R eine Kollision mit vor dem entsprechenden Fahrzeugsitz befindlichen Baugruppen des Kraftfahrzeugs, wie z. B. des Armaturenbrettes (im Fall eines Vordersitzes) bzw. mit einem anderen Fahrzeugsitz (im Fall eines Rücksitzes) verhindert werden soll.

Anhand der Figuren 1b und 1c wird deutlich, dass die Rückenlehne R über ein Zugmittel 1 in Form eines Zugseiles der Sitzwanne W gekoppelt ist. Das Zugseil 1 durchgreift mit seinem lehnenseitigen Endabschnitt eine als Druckfeder ausgebildete Schraubenfeder 2 (Ausgleichsfeder) und weist an seinem Ende eine Verdickung 11 (in Form eines Seilnippels) auf, so dass das Zugseil 1 mit seinem rückenlehnenseitigen Ende 11 an der Schraubenfeder 2 festgelegt ist.

Die Schraubenfeder 2 stützt sich mit ihrem dem Ende 11 des Zugseils 1 abgewandten Ende an einem schwenkbar an der Rückenlehne R gelagerten Stützbolzen 3a (vergleiche Figur 1d) ab, der eine Durchgangsöffnung 31 aufweist, die von dem Zugseil11 durchgriffen wird. Das Zugseil 1 steht bei in Gebrauchsposition befindlicher Rückenlehne derart unter Spannung, dass die Schraubenfeder 2 zwischen dem einen Ende 11 des Zugseils 1 und dem Stützbolzen 3a der Rückenlehne R unter leichter Vorspannung aufgenommen ist.

Hinter der Rückenlehne R ist das Zugseil 1 abschnittsweise in einer Bowdenhülle 10 geführt, die sich einerseits an einem drehbar am Lehnenträger T gelagerten Stützbolzen 3b und andererseits an einem drehbar an einem Entriegelungshebel 4 gelagerten Stützbolzen 3c abstützt. Die Stützbolzen 3b, 3c weisen entsprechend dem in Figur 1d dargestellten, an der Rückenlehne R vorgesehenen Stützbolzen 3a ebenfalls Durchgangsöffnungen 31 für das Zugseil 1 auf.

Die Bowdenhülle 10 ist in Figur 1c aufgeschnitten dargestellt und dementsprechend in zwei Abschnitte unterteilt. Tatsächlich ist an beiden Längsseiten der Rückenlehne R im Bereich des jeweiligen Lehnenträgers T, vergleiche Figur 1a, jeweils ein Zugmittel 1 über eine Druckfeder 2 festgelegt, das sich von der Rückenlehne R zu der Sitzwanne W erstreckt. Dabei werden jedoch die Zugmittel 1 auf die jeweils gegenüberliegende Längsseite des Fahrzeugsitzes geführt. D. h., das Zugmittel, das auf der einen Längsseite des Fahrzeugsitzes an der Rückenlehne R festgelegt ist, wird zu der gegenüberliegenden Längsseite der Sitzwanne geführt und umgekehrt. Dadurch kreuzen sich die Zugmittel 1 und damit auch die zugehörigen Bowdenhüllen 10 unterhalb der Sitzwanne W. D. h., der in Figur 1c dargestellte rückenlehnenseitige Abschnitt des Bowdenzugs 1, 10 erstreckt sich zu der (in Figur 1c nicht erkennbaren) anderen Längsseite der Sitzwanne W und der in Figur 1c dargestellte, entlang der Sitzwanne W erstreckte Abschnitt des Bowdenzugs 1, 10 erstreckt sich zu dem gegenüberliegenden, in Figur 1c nicht dargestellten Lehnenträger T. Im folgenden wird jedoch der Einfachheit halber die Beschreibung so fortgeführt, als verliefe der in Figur 1c erkennbare Bowdenzug 1, 10 durchgängig von der Rückenlehne R zu der Sitzwanne W.

Wie anhand Figur 1c in Verbindung mit den Figuren 1a und 1b dargestellt, erstreckt sich das Zugseil 1 von dem Entriegelungshebel 4 entlang der Sitzwanne W bis zu deren vorderem Ende, wird dort mittels eines Umlenkelementes 15 umgelenkt und ist mit seinem zweiten Ende 12 im Bereich des vorderen Endes der Sitzwanne W an dieser festgelegt.

Der um eine am Sitzseitenteil S ausgebildete Achse 40 verschwenkbar gelagerte Entriegelungshebel 4, an dessen einem Hebelarm 41 der zweite Stützbolzen 3c der Bowdenhülle 10 gelagert ist, weist an seinem zweiten Hebelarm 42 eine Kulissenführung 44 auf, in die ein Führungszapfen 51 eines um eine Schwenkachse 50 verschwenkbar gelagerten Verriegelungshebels 5 eingreift. Der Verriegelungshebel 5 ist mittels einer als Schenkelfeder ausgebildeten Drehfeder 55, deren einer Schenkel sich am Sitzseitenteil S abstützt und deren anderer Schenkel auf den Bolzen 51 einwirkt, in Richtung auf eine Verriegelungsposition vorgespannt, in der der Verriegelungshebel 5 eine Bewegung der Schwenkachse A' in der zugeordneten Kulisse K' des Sitzseitenteils S verhindert. Hierdurch ist die Sitzwanne W mittels des Verriegelungshebels 5 verriegelt, da eine Schwenkbewegung der Sitzwanne W um ihre Achse A' aufgrund der gewählten Geometrie und Anordnung des vorderen Schwenkhebels 6 stets von einer Verschiebung der Schwenkachse A' in der zugeordneten Führungskulisse K' begleitet sein muss. Wird eine solche Verschiebung mittels des Verriegelungshebels 5 verhindert, so ist die Sitzwanne W insgesamt arretiert.

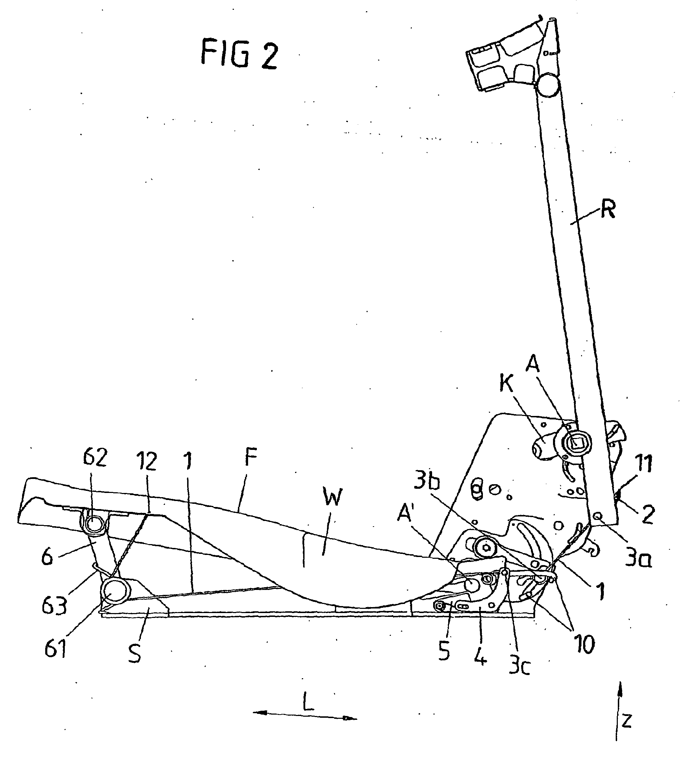

Bei einem Vorklappen der Rückenlehne R in Richtung auf die Sitzfläche F wird die Rückenlehne R zunächst aus der in den Figuren 1a bis 1c dargestellten Gebrauchsposition heraus in die Vertikale verschoben, wobei sich das Zugseil 1 und die Ausgleichsfeder 2 etwas entspannen. Beim weiteren Vorklappen der Rückenlehne R in Richtung auf die Sitzfläche F, wie in Figur 2 dargestellt, kommt es zu einer zunehmenden Straffung des Zugseiles 1 und damit zu einer zunehmenden Komprimierung und Verspannung der Ausgleichsfeder 2, da der Abstand des rückenlehnenseitigen Endes 11 des Zugmittels 1 von dem sitzuntergestellseitigen Umlenkelement 15 wächst. Diese Straffung des Zugseiles 1 wird in einem ersten Schwenkbereich der Rückenlehne R so lange durch eine zunehmende Verspannung der Ausgleichsfeder 2 kompensiert, bis die Ausgleichsfeder 2 auf Block zusammengedrückt ist und nicht weiter komprimiert werden kann.

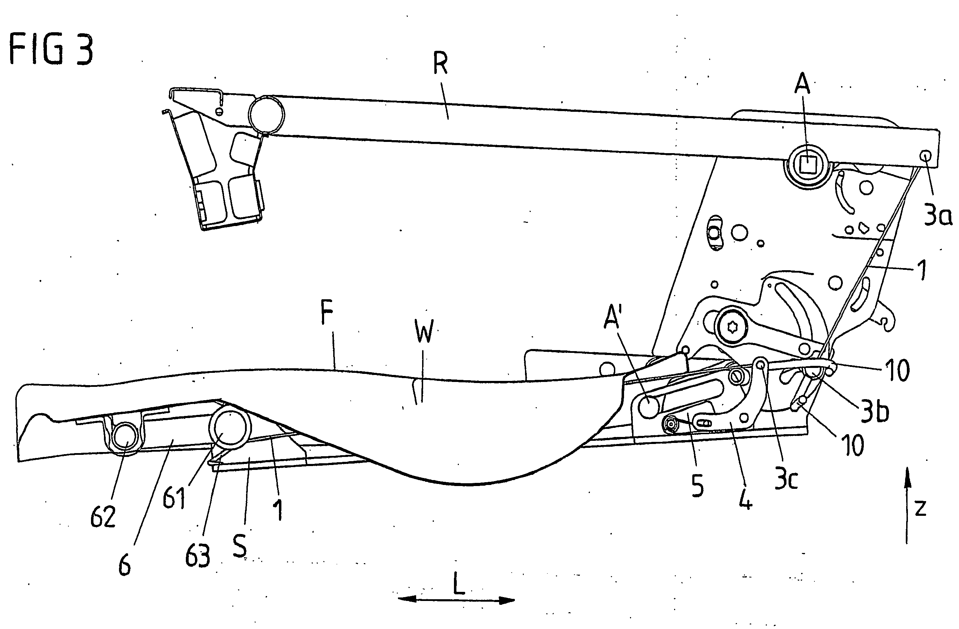

Auch in diesem Zustand führt jedoch die zunehmende Straffung des Zugseiles 1 in einem zweiten Schwenkbereich der Rückenlehne R noch nicht zu einer Bewegung des Zugseiles 1 selbst. Denn diese wird dadurch verhindert, dass die Sitzwanne W mittels des Verriegelungshebels 5 verriegelt ist und daher nicht verschwenkt werden kann. Insofern ist das sitzwannenseitige Ende 12 des Zugseiles 1 ortsfest fixiert und kann trotz der zunehmenden Straffung des Zugseiles 1 beim weiteren Vorklappen der Rückenlehne R noch keine Zugbewegung ausführen. Statt dessen kommt es zunächst zu einer Relativbewegung der Bowdenhülle 11 relativ zu dem Zugmittel 1 entgegen der Zugrichtung, wobei die Bowdenhülle 10 gegen den am Entriegelungshebel 4 angeordneten Stützbolzen 3c drückt und dabei den Entriegelungshebel 4 (entgegen dem Uhrzeigersinn) verschwenkt. Dabei wird über die am Entriegelungshebel 4 vorgesehene Führungskulisse 44 und den am Verriegelungshebel 5 vorgesehenen Bolzen 51 der Verriegelungshebel 5 mitgenommen, so dass dieser entgegen der Wirkung der Drehfeder 55 (im Uhrzeigersinn) verschwenkt wird, wobei er die Schwenkachse A' in der zugeordneten Führungskulisse K' des Sitzseitenteils S freigibt. Die Sitzwanne W ist dann nicht mehr verriegelt und die Zugkraft des Zugmittels bewirkt beim weiteren Vorklappen der Rückenlehne R in einem dritten Schwenkbereich ein Absenken des vorderen Endes der Sitzwanne W, wobei der entsprechende Schwenkhebel 6 entgegen dem Uhrzeigersinn nach vorne verschwenkt wird. Dies entspricht einer kombinierten Absenkung und Vorverlagerung der Sitzwanne W an deren vorderem Ende, wobei sich deren Schwenkachse A' in der zugeordneten Kulissenführung K' ebenfalls nach vorne und nach unten bewegt. Der Sitz befindet sich dann gemäß Figur 3 in einem Zustand, in dem oberhalb der Rückenlehne R zusätzlicher Stau- bzw. Transportraum zur Verfügung gestellt wird.

Wenn die Rückenlehne R ausgehend von dem in Figur 3 dargestellten vorgeklappten Zustand wieder in ihre in den Figuren 1a und 1b dargestellte Gebrauchsposition zurückgeschwenkt wird, dann wird hierbei das erneute Anheben und Zurückverlagern des vorderen Endes der Sitzwanne W durch die auf den Schwenkhebel 6 einwirkende Rückstellfeder 63 unterstützt.

Wenn die Rückenlehne R auf ihrem Weg zurück in die Gebrauchsposition so weit hochgeklappt worden ist, dass die Zugspannung des Zugseiles 1 vollständig durch die Ausgleichsfeder 2 kompensiert wird, dann kehrt unter der Wirkung der Drehfeder 55 auch der Verriegelungshebel 5 in die Position zurück, in der er die Schwenkachse A' der Sitzwanne W wieder am hinteren Ende der entsprechenden Führungskulisse K' blockiert und damit die Sitzwanne W verriegelt. (Die Rückkehr der Schwenkachse A' der Sitzwanne W zum hinteren Ende der Führungskulisse K' erfolgt automatisch beim Zurückschwenken, d.h. Hochklappen, der Rückenlehne R aufgrund der nachlassenden Zugspannung des Zugseiles 1 sowie der damit verbundenen automatischen Schwenkbewegung des Schwenkhebels 6 nach oben unter der Wirkung der Rückstellfeder 63.)

Beim weiteren Zurückschwenken der Rückenlehne R (in etwa von dem in Figur 2 dargestellten, leicht nach vorne geneigten Zustand bis in die in den Figuren 1a und 1b gezeigte Gebrauchsposition) werden Änderungen in der Zugspannung des Zugseiles 1 vollständig durch die Ausgleichsfeder 2 kompensiert und wirken sich nicht auf den Entriegelungshebel 4, den Verriegelungshebel 5 oder den Schwenkhebel 6 der Sitzwanne W aus.

Der vorstehend anhand der Figuren 1a bis 3 erläuterte Fahrzeugsitz hat den wichtigen Vorteil, dass in einem begrenzten Schwenkbereich beim Vorklappen der Rückenlehne aus einer Gebrauchsposition in Richtung auf die Sitzfläche eine Straffung des Zugseiles, über das die Rückenlehne mit der Sitzwanne gekoppelt ist, vollständig durch eine Deformation einer Ausgleichsfeder kompensiert wird. Dadurch wirkt sich diese Straffung des Zugseiles zunächst weder auf die Sitzwanne noch auf deren Verriegelungseinrichtung (Verriegelungshebel) aus. Erst wenn die Ausgleichsfeder auf Block zusammengedrückt ist, bewirkt das Zugseil über die zugeordnete Bowdenhülle eine Entriegelung des Verriegelungshebels und löst dann eine Vorverlagerung und Absenkung des vorderen Endes der Sitzwanne aus.

Dabei ist von Bedeutung, dass die Ausgleichsfeder 2 leichter deformierbar ist als die Drehfeder 55, mit der der Verriegelungshebel 5 in Richtung auf den verriegelten Zustand vorgespannt ist. Denn dies hat zur Folge, dass die Straffung des Zugmittels 1 beim Vorklappen der Rückenlehne R zunächst ein Zusammendrücken der Ausgleichsfeder 2 bewirkt und erst anschließend eine Entriegelung des Verriegelungshebels 5 entgegen der Wirkung der Drehfeder 55.

## Patentansprüche

1. Kraftfahrzeugsitz mit
- einer Rückenlehne (R), die aus mindestens einer Gebrauchsposition, in der sie zum Abstützen des Rückens eines Sitzbenutzers dient, durch Verschwenken auf eine Sitzfläche des Kräftfahrzeugsitzes vorklappbar ist,
- einem Polsterträger (W), der zur Aufnahme eines Sitzpolsters dient, das die Sitzfläche definiert und auf dem ein Sitzbenutzersitzen kann, und
- einem Koppelglied (1), über das die Rückenlehne (R) derart mit dem Polsterträger (W) gekoppelt ist, dass dieser beim Vorklappen der Rückenlehne (R) verlagert, insbesondere abgesenkt und/oder in Sitzlängsrichtung bewegt, wird,
**dadurch gekennzeichnet,**
**dass** das Koppelglied (1) derart mit einem elastischen Element (2) in Verbindung steht, dass bei einem Verschwenken der Rückenlehne. (R) aus einer Gebrauchsposition heraus in einem ersten Schwenkbereich das elastische Element (2) deformiert wird damit die Lage des Polsterträgers nicht beeinflusst wird dass und in mindestens einem weiteren Schwenkbereich das Koppelglied (1) auf den Polsterträger (W) einwirken kann, um diesen zu verlagern.

2. Kraftfahrzeugsitz nach Anspruch 1, **dadurch gekennzeichnet, dass** das Koppelglied (1) längserstreckt ausgebildet ist und das elastische Element (2) an einem Ende (11) des Koppelgliedes (1) angreift.

3. Kraftfahrzeugsitz nach Anspruch 1 oder 2, **dadurch gekennzeichnet, dass** das Koppelglied (1) als Druck- oder als Zugmittels ausgebildet ist.

4. Kraftfahrzeugsitz nach Anspruch 3, **dadurch gekennzeichnet, dass** das Koppelglied (1) als flexibles Zugmittel, insbesondere als Zugseil, ausgebildet ist.

5. Kraftfahrzeugsitz nach Anspruch 4, **dadurch gekennzeichnet, dass** das Koppelglied (1) zumindest abschnittsweise in einer Bowdenhülle (10) geführt ist.

6. Kraftfahrzeugsitz nach einem der vorhergehenden Ansprüche, **dadurch gekennzeichnet, dass** das Koppelglied (1) über das elastische Element (2) mit der Rückenlehne (R) in Verbindung steht.

7. Kraftfahrzeugsitz nach Anspruch 6, **dadurch gekennzeichnet, dass** das elastische Element (2) sich an der Rückenlehne (R) abstützt, und zwar vorzugsweise über ein drehbar an der Rückenlehne (R) angeordnetes Stützelement (3a).

8. Kraftfahrzeugsitz nach Anspruch 7, **dadurch gekennzeichnet, dass** das elastische Element (2) an einem Ende mit dem Koppelglied (1) verbunden ist und sich mit dem anderen Ende an der Rückenlehne (R) abstützt, so dass bei einem Vorklappen der Rückenlehne (R) unter der Wirkung des Koppelgliedes (1) zunächst das elastische Element (2) deformiert, bevor das Koppelglied (1) zur Verlagerung auf den Polsterträger (W) einwirken kann.

9. Kraftfahrzeugsitz nach Anspruch 4 und 8, **dadurch gekennzeichnet, dass** das Zugmittel (1) beim Vorklappen der Rückenlehne (R) gestrafft wird, wodurch zunächst das elastische Element (2) deformiert wird.

10. Kraftfahrzeugsitz nach einem der vorhergehenden Ansprüche, **dadurch gekennzeichnet, dass** das elastische Element (2) als Zug- oder als Druckfeder ausgebildet ist.

11. Kraftfahrzeugsitz nach einem der Ansprüche 2 bis 10, **dadurch gekennzeichnet, dass** das elastische Element (2) als Schraubenfeder ausgebildet ist, die einen Endabschnitt des Koppelgliedes (1) umschließt.

12. Kraftfahrzeugsitz nach einem der Ansprüche 2 bis 11, **dadurch gekennzeichnet, dass** das Koppelglied (1) mit einem Ende (11) an der Rückenlehne (R) und mit dem anderen Ende (12) am Polsterträger (W) angreift.

13. Kraftfahrzeugsitz nach Anspruch 12, **dadurch gekennzeichnet, dass** das Koppelglied (1) am Polsterträger (W) im Bereich von dessen in Sitzlängsrichtung (L) vorderem Ende angreift.

14. Kraftfahrzeugsitz nach einem der vorhergehenden Ansprüche, **dadurch gekennzeichnet, dass** ein Verriegelungsmechanismus (5) vorgesehen ist, mit dem der Polsterträger (W) derart verriegelbar ist, dass er nicht unter der Wirkung des Koppelgliedes (1) verlagert werden kann.

15. Kraftfahrzeugsitz nach Anspruch 14, **dadurch gekennzeichnet, dass** der Verriegelungsmechanismus (5) in Richtung auf den verriegelten Zustand vorgespannt ist.

16. Kraftfahrzeugsitz nach Anspruch 14 oder 15, **dadurch gekennzeichnet, dass** der Verriegelungsmechanismus (5) durch Einwirkung der Rückenlehne (R) auf das Koppelglied (1) entriegelbar ist.

17. Kraftfahrzeugsitz nach Anspruch 16, **dadurch gekennzeichnet, dass** der Verriegelungsmechanismus (5) nach einer vorgebbaren, insbesondere vollständigen, Deformation des elastischen Elementes (2) durch weitere Einwirkung der Rückenlehne (R) auf das Koppelglied (1) beim Vorklappen der Rückenlehne (R) entriegelbar ist.

18. Kraftfahrzeugsitz nach Anspruch 16 oder 17, **dadurch gekennzeichnet, dass** der Verriegelungsmechanismus (5) durch eine mit dem Koppelglied (1) in Wirkverbindung stehende Baugruppe (10) entriegelbar ist.

19. Kraftfahrzeugsitz nach Anspruch 5 und 18, **dadurch gekennzeichnet, dass** der Verriegelungsmechanismus (5) mittels der Bowdenhülle (10) **dadurch** entriegelbar ist, dass diese bei einer Straffung des Zugmittels (1) verschoben wird.

20. Kraftfahrzeugsitz nach Anspruch 19, **dadurch gekennzeichnet, dass** die Bowdenhülle (10) mit einem Entriegelungselement (4) in Verbindung steht, das zur Entriegelung des Verriegelungsmechanismus (5) vorgesehen ist, wobei sich die Bowdenhülle (10) vorzugsweise an dem Entriegelungselement (4) abstützt.

21. Kraftfahrzeugsitz nach Anspruch 20, **dadurch gekennzeichnet, dass** sich die Bowdenhülle (10) an einem drehbar gelagerten Stützelement (3c) des Entriegelungselementes (4) abstützt.

22. Kraftfahrzeugsitz nach Anspruch 20 oder 21, **dadurch gekennzeichnet, dass** sich die Bowdenhülle (10) mit dem anderen Ende an einem Träger (T) der Rückenlehne (R) abstützt, insbesondere an einem drehbar an dem Lehnenträger (T) gelagerten Stützelement (3b).

23. Kraftfahrzeugsitz nach einem der Ansprüche 18 bis 22, **dadurch gekennzeichnet, dass** nach der Entriegelung des Verriegelungsmechanismus (5) das Koppelglied (1) bei einem weiteren Vorklappen der Rückenlehne (R) bewegt wird, so dass es eine Verlagerung des Polsterträgers (W) bewirkt.

24. Kraftfahrzeugsitz nach Anspruch 2 und einem der Ansprüche 7, 21 oder 22, **dadurch gekennzeichnet, dass** das Stützelement (3a, 3b, 3c) eine Durchgangsöffnung (31) für das längserstreckte Koppelglied (1) aufweist.

25. Kraftfahrzeugsitz nach einem der vorhergehenden Ansprüche, **dadurch gekennzeichnet, dass** der Polsterträger (W) über einen Schwenkhebel (6) mit einer bodenfesten Baugruppe (S) eines Kraftfahrzeugs verbindbar ist.

26. Kraftfahrzeugsitz nach einem der vorhergehenden Ansprüche, **dadurch gekennzeichnet, dass** dem Polsterträger (W) eine Führungseinrichtung (A', K') zugeordnet ist, mittels derer er bei einer Verlagerung geführt wird und dass die Führungseinrichtung (A', K') durch eine Führungskulisse (K') und einen darin geführten Bolzen (K') gebildet wird.

27. Kraftfahrzeugsitz nach Anspruch 24 und 26, **dadurch gekennzeichnet, dass** der Verriegelungsmechanismus (5) im verriegelten Zustand auf die Führungseinrichtung (A', K') einwirkt, um eine Verlagerung des Polsterträgers (W) zu blockieren.

28. Kraftfahrzeugsitz nach Anspruch 27, **dadurch gekennzeichnet, dass** der Verriegelungsmechanismus (5) mittels eines schwenkbar gelagerten Verriegelungshebels auf die Führungseinrichtung (A', K') einwirkt.

29. Kraftfahrzeugsitz nach einem der vorhergehenden Ansprüche, **dadurch gekennzeichnet, dass** das elastische Element (2) ein Vorklappen der Rückenlehne (R) aus der mindestens einen Gebrauchsposition heraus in Richtung auf die Sitzfläche (F) um einen definierten Schwenkwinkel gestattet, ohne dass die Rückenlehne (R) über das Koppelglied (1) eine Verlagerung des Polsterträgers (W) bewirkt.

30. Kraftfahrzeugsitz nach einem der vorhergehenden Ansprüche, **dadurch gekennzeichnet, dass** die Rückenlehne (R) um eine Achse (A) verschwenkbar gelagert ist.

31. Kraftfahrzeugsitz nach Anspruch 30, **dadurch gekennzeichnet, dass** die Schwenkachse als ortsfeste Achse ausgebildet ist.

32. Kraftfahrzeugsitz nach Anspruch 30, **dadurch gekennzeichnet, dass** die Schwenkachse (A) als eine beim Vorklappen der Rückenlehne (R) verlagerbare Achse ausgebildet ist.

33. Kraftfahrzeugsitz nach einem der vorhergehenden Ansprüche, **dadurch gekennzeichnet, dass** der Rückenlehne (R) eine Verstelleinrichtung zugeordnet ist, mittels der die Rückenlehne (R) in einem Gebrauchsbereich durch Verschwenken in verschiedene Gebrauchspositionen einstellt werden kann.

34. Kraftfahrzeugsitz nach Anspruch 33, **dadurch gekennzeichnet, dass** bei einem Verschwenken der Rückenlehne (R) innerhalb des Gebrauchsbereiches das elastische Element (2) durch Verspannen oder Entspannen deformiert wird, so dass keine Einwirkung des Koppelgliedes (1) auf den Polsterträger (W) erfolgt.

35. Kraftfahrzeugsitz nach einem der vorhergehenden Ansprüche, **dadurch gekennzeichnet, dass** bei einem Verschwenken der Rückenlehne (R) aus einer Gebrauchsposition heraus nach vorne
- in einem ersten Schwenkbereich das elastische Element (2) deformiert wird, so dass das Koppelglied (1) nicht auf die Sitzwanne (W) einwirken kann,
- in einem daran anschließenden zweiten Schwenkbereich ein Verriegelungsmechanismus (5) des Polsterträgers (W) entriegelt wird und
- in einem daran anschließenden dritten Schwenkbereich das Koppelglied. (2) derart auf den Polsterträger (W) einwirkt, dass dieser verlagert wird.

## Claims

1. Motor vehicle seat comprising
- a backrest (R) which may be folded forward from at least one position of use, in which it serves to support the back of a seat occupant, by pivoting onto a seat surface of the motor vehicle seat,
- an upholstery carrier (W) which serves to receive a seat cushion, which defines the seat surface and on which a seat occupant is able to be seated, and
- a coupling member (1) via which the backrest (R) is coupled to the upholstery carrier (W) such that said upholstery carrier is displaced, in particular lowered and/or moved in the longitudinal direction of the seat, when the backrest (R) is folded forward
**characterized in that**
the coupling member (1) is connected to an elastic element (2) such that when the backrest (R) is pivoted from a position of use in a first pivoting region, the elastic element (2) is deformed, so that the position of the upholstery carrier is not affected and **in that** in at least one further pivoting region the coupling member (1) is able to act on the upholstery carrier (W), in order to displace said upholstery carrier.

2. Motor vehicle seat according to Claim 1, **characterized in that** the coupling member (1) is configured to be longitudinally extended and the elastic element (2) acts at one end (11) of the coupling member (1).

3. Motor vehicle seat according to Claim 1 or 2, **characterized in that** the coupling member (1) is configured as a compression means or traction means.

4. Motor vehicle seat according to Claim 3, **characterized in that** the coupling member (1) is configured as a flexible traction means, in particular as a traction cable.

5. Motor vehicle seat according to Claim 4, **characterized in that** the coupling member (1) is guided at least partially in a Bowden sheath (10).

6. Motor vehicle seat according to one of the preceding claims, **characterized in that** the coupling member (1) is connected to the backrest (R) via the elastic element (2).

7. Motor vehicle seat according to Claim 6, **characterized in that** the elastic element (2) is supported on the backrest (R), and namely preferably via a support element (3a) arranged rotatably on the backrest (R).

8. Motor vehicle seat according to Claim 7, **characterized in that** the elastic element (2) is connected at one end to the coupling member (1) and is supported by the other end on the backrest (R), so that when folding forward the backrest (R), by the action of the coupling member (1) the elastic element (2) is initially deformed before the coupling member (1) is able to act on the upholstery carrier (W) for displacement.

9. Motor vehicle seat according to Claims 4 and 8, **characterized in that** the traction means (1) is tightened when the backrest (R) is folded forward, whereby the elastic element (2) is initially deformed.

10. Motor vehicle seat according to one of the preceding claims, **characterized in that** the elastic element (2) is configured as a tension spring or as a compression spring.

11. Motor vehicle seat according to one of Claims 2 to 10, **characterized in that** the elastic element (2) is configured as a coil spring, which encloses an end portion of the coupling member (1).

12. Motor vehicle seat according to one of Claims 2 to 11, **characterized in that** the coupling member (1) acts with one end (11) on the backrest (R) and with the other end (12) on the upholstery carrier (W).

13. Motor vehicle seat according to Claim 12, **characterized in that** the coupling member (1) on the upholstery carrier (W) acts in the region of the front end thereof in the longitudinal direction of the seat (L) .

14. Motor vehicle seat according to one of the preceding claims, **characterized in that** a locking mechanism (5) is provided by means of which the upholstery carrier (W) may be locked such that it may not be displaced under the action of the coupling member (1).

15. Motor vehicle seat according to Claim 14, **characterized in that** the locking mechanism (5) is pretensioned toward the locked state.

16. Motor vehicle seat according to Claim 14 or 15, **characterized in that** the locking mechanism (5) may be unlocked by the action of the backrest (R) on the coupling member (1).

17. Motor vehicle seat according to Claim 16, **characterized in that** the locking mechanism (5) may be unlocked after a predeterminable, in particular complete, deformation of the elastic element (2) by further action of the backrest (R) on the coupling member (1) when the backrest (R) is folded forward.

18. Motor vehicle seat according to Claim 16 or 17, **characterized in that** the locking mechanism (5) may be unlocked by a subassembly (10) cooperating with the coupling member (1).

19. Motor vehicle seat according to Claims 5 and 18, **characterized in that** the locking mechanism (5) may be unlocked by means of the Bowden sheath (10) as said Bowden sheath is displaced when the traction means (1) is tightened.

20. Motor vehicle seat according to Claim 19, **characterized in that** the Bowden sheath (10) cooperates with an unlocking element (4) which is provided for unlocking the locking mechanism (5), the Bowden sheath (10) preferably being supported on the unlocking element (4).

21. Motor vehicle seat according to Claim 20, **characterized in that** the Bowden sheath (10) is supported on a rotatably mounted support element (3c) of the unlocking element (4).

22. Motor vehicle seat according to Claim 20 or 21, **characterized in that** the Bowden sheath (10) is supported by the other end on a carrier (T) of the backrest (R), in particular on a support element (3b) rotatably mounted on the backrest carrier (T).

23. Motor vehicle seat according to one of Claims 18 to 22, **characterized in that** after unlocking the locking mechanism (5) the coupling member (1) is moved when the backrest (R) is folded further forward, so that it causes a displacement of the upholstery carrier (W) .

24. Motor vehicle seat according to Claim 2 and one of Claims 7, 21 or 22, **characterized in that** the support element (3a, 3b, 3c) has a through-opening (31) for the longitudinally extended coupling member (1).

25. Motor vehicle seat according to one of the preceding claims, **characterized in that** the upholstery carrier (W) may be connected via a swivel lever (6) to a subassembly (S) fixed to the floor of a motor vehicle.

26. Motor vehicle seat according to one of the preceding claims, **characterized in that** a guide device (A', K') is associated with the upholstery carrier (W), by means of which it is guided during displacement and **in that** the guide device (A' , K') is formed by a guiding slide (K') and a pin (K') guided therein.

27. Motor vehicle seat according to Claims 24 and 26, **characterized in that** the locking mechanism (5) in the locked state acts on the guide device (A', K'), in order to block a displacement of the upholstery carrier (W).

28. Motor vehicle seat according to Claim 27, **characterized in that** the locking mechanism (5) acts on the guide device (A', K') by means of a pivotably mounted locking lever.

29. Motor vehicle seat according to one of the preceding claims, **characterized in that** the elastic element (2) permits the backrest (R) to be folded forward from the at least one position of use toward the seat surface (F) about a defined pivoting angle without the backrest (R) causing a displacement of the upholstery carrier (W) via the coupling member (1).

30. Motor vehicle seat according to one of the preceding claims, **characterized in that** the backrest (R) is pivotably mounted about an axis (A).

31. Motor vehicle seat according to Claim 30, **characterized in that** the pivot axis is configured as a fixed axis.

32. Motor vehicle seat according to Claim 30, **characterized in that** the pivot axis (A) is configured as a displaceable axis when the backrest (R) is folded forward.

33. Motor vehicle seat according to one of the preceding claims, **characterized in that** an adjusting device is associated with the backrest (R), by means of which the backrest (R) is able to be adjusted in a usable range by pivoting into various positions of use.

34. Motor vehicle seat according to Claim 33, **characterized in that** when the backrest (R) is pivoted within the usable range, the elastic element (2) is deformed by tensioning or releasing so that the coupling member (1) does not act on the upholstery carrier (W).

35. Motor vehicle seat according to one of the preceding claims, **characterized in that** when pivoting the backrest (R) from a position of use toward the front
- in a first pivoting region, the elastic element (2) is deformed so that the coupling member (1) is not able to act on the seat trough (W).
- in a second pivoting region connected thereto, a locking mechanism (5) of the upholstery carrier (W) is unlocked and
- in a third pivoting region connected thereto, the coupling member (2) acts on the upholstery carrier (W) such that said upholstery carrier is displaced.

## Revendications

1. Siège de véhicule automobile comprenant
- un dossier (R) qui peut être rabattu vers l'avant depuis au moins une position d'utilisation, dans laquelle il sert à soutenir le dos d'un utilisateur du siège, par pivotement sur une surface d'assise du siège de véhicule automobile,
- un support de rembourrage (W), qui sert à recevoir un rembourrage de siège, lequel rembourrage définit la surface d'assise et sur lequel peut s'asseoir un utilisateur de siège, et
- un organe de couplage (1) par l'intermédiaire duquel le dossier (R) est couplé au support de rembourrage (W) de telle manière que celui-ci est déplacé, en particulier abaissé et/ou déplacé dans le sens longitudinal du siège, lors du rabattement du dossier (R) vers l'avant,
**caractérisé en ce**
**que** l'organe de couplage (1) est en liaison avec un élément élastique (2) de telle manière que lors d'un pivotement du dossier (R) depuis une position d'utilisation, l'élément élastique (2) est déformé dans une première zone de pivotement pour que la position du support de rembourrage ne soit pas influencée, et que dans au moins une autre zone de pivotement l'organe de couplage (1) peut agir sur le support de rembourrage (W) afin de déplacer celui-ci.

2. Siège de véhicule automobile selon la revendication 1, **caractérisé en ce que** l'organe de couplage (1) est réalisé de manière étendue longitudinalement et l'élément élastique (2) agit sur une extrémité (11) de l'organe de couplage (1).

3. Siège de véhicule automobile selon la revendication 1 ou 2, **caractérisé en ce que** l'organe de couplage (1) est conçu comme moyen de pression ou de traction.

4. Siège de véhicule automobile selon la revendication 3, **caractérisé en ce que** l'organe de couplage (1) est conçu comme moyen de traction flexible, en particulier comme câble de traction.

5. Siège de véhicule automobile selon la revendication 4, **caractérisé en ce que** l'organe de couplage (1) est guidé au moins par sections dans une gaine Bowden (10).

6. Siège de véhicule automobile selon l'une quelconque des revendications précédentes, **caractérisé en ce que** l'organe de couplage (1) est en liaison avec le dossier (R) par l'intermédiaire de l'élément élastique (2).

7. Siège de véhicule automobile selon la revendication 6, **caractérisé en ce que** l'élément élastique (2) s'appuie contre le dossier (R), et ce de préférence par l'intermédiaire d'un élément d'appui (3a) agencé sur le dossier (R) de manière à pouvoir tourner.

8. Siège de véhicule automobile selon la revendication 7, **caractérisé en ce que** l'élément élastique (2) est relié à l'organe de couplage (1) à une extrémité et s'appuie avec l'autre extrémité contre le dossier (R), de sorte que lors d'un rabattement du dossier (R) vers l'avant sous l'action de l'organe de couplage (1) tout d'abord l'élément élastique (2) est déformé avant que l'organe de couplage (1) puisse agir sur le support de rembourrage (W) pour le déplacement.

9. Siège de véhicule automobile selon la revendication 4 et 8, **caractérisé en ce que** le moyen de traction (1) est tendu lors du rabattement du dossier (R) vers l'avant, ce qui déforme dans un premier temps l'élément élastique (2).

10. Siège de véhicule automobile selon l'une quelconque des revendications précédentes, **caractérisé en ce que** l'élément élastique (2) est conçu comme ressort de traction ou de pression.

11. Siège de véhicule automobile selon l'une quelconque des revendications 2 à 10, **caractérisé en ce que** l'élément élastique (2) est conçu comme ressort à boudin, lequel entoure une section terminale de l'organe de couplage (1).

12. Siège de véhicule automobile selon l'une quelconque des revendications 2 à 11, **caractérisé en ce que** l'organe de couplage (1) agit avec une extrémité (11) sur le dossier (R) et avec l'autre extrémité (12) sur le support de rembourrage (W).

13. Siège de véhicule automobile selon la revendication 12, **caractérisé en ce que** l'organe de couplage (1) agit sur le support de rembourrage (W) dans la zone de l'extrémité avant dudit support dans le sens longitudinal du siège (L).

14. Siège de véhicule automobile selon l'une quelconque des revendications précédentes, **caractérisé en ce qu'**un mécanisme de verrouillage (5) est prévu, au moyen duquel le support de rembourrage (W) peut être verrouillé de telle manière qu'il ne peut pas être déplacé sous l'action de l'organe de couplage (1).

15. Siège de véhicule automobile selon la revendication 14, **caractérisé en ce que** le mécanisme de verrouillage (5) est précontraint en direction de l'état verrouillé.

16. Siège de véhicule automobile selon la revendication 14 ou 15, **caractérisé en ce que** le mécanisme de verrouillage (5) peut être déverrouillé par action du dossier (R) sur l'organe de couplage (1).

17. Siège de véhicule automobile selon la revendication 16, **caractérisé en ce que** le mécanisme de verrouillage (5) peut être déverrouillé après une déformation pouvant être prédéterminée, en particulier complète de l'élément élastique (2) par action supplémentaire du dossier (R) sur l'organe de couplage (1) lors du rabattement du dossier (R) vers l'avant.

18. Siège de véhicule automobile selon la revendication 16 ou 17, **caractérisé en ce que** le mécanisme de verrouillage (5) peut être déverrouillé par un module (10) se trouvant en liaison active avec l'organe de couplage (1).

19. Siège de véhicule automobile selon la revendication 5 et 18, **caractérisé en ce que** le mécanisme de verrouillage (5) peut être déverrouillé au moyen de la gaine Bowden (10) du fait que celle-ci est déplacée lorsque le moyen de traction (1) est tendu.

20. Siège de véhicule automobile selon la revendication 19, **caractérisé en ce que** la gaine Bowden (10) est en liaison avec un élément de déverrouillage (4), lequel est prévu pour déverrouiller le mécanisme de verrouillage (5), la gaine Bowden (10) s'appuyant de préférence contre l'élément de déverrouillage (4).

21. Siège de véhicule automobile selon la revendication 20, **caractérisé en ce que** la gaine Bowden (10) s'appuie contre un élément d'appui (3c), logé de manière à pouvoir tourner, de l'élément de déverrouillage (4).

22. Siège de véhicule automobile selon la revendication 20 ou 21, **caractérisé en ce que** la gaine Bowden (10) s'appuie avec l'autre extrémité contre un support (T) du dossier (R), en particulier contre un élément d'appui (3b) logé sur le support de dossier (T) de manière à pouvoir tourner.

23. Siège de véhicule automobile selon l'une quelconque des revendications 18 à 22, **caractérisé en ce que** après le déverrouillage du mécanisme de verrouillage (5), l'organe de couplage (1) est déplacé lorsque le dossier (R) est davantage rabattu vers l'avant, de sorte que cela provoque un déplacement du support de rembourrage (W).

24. Siège de véhicule automobile selon la revendication 2 et selon l'une quelconque des revendications 7, 21 ou 22, **caractérisé en ce que** l'élément d'appui (3a, 3b, 3c) comporte une ouverture de passage (31) pour l'organe de couplage (1) étendu longitudinalement.

25. Siège de véhicule automobile selon l'une quelconque des revendications précédentes, **caractérisé en ce que** le support de rembourrage (W) peut être relié par l'intermédiaire d'un levier pivotant (6) à un module (S) solidaire du plancher d'un véhicule automobile.

26. Siège de véhicule automobile selon l'une quelconque des revendications précédentes, **caractérisé en ce qu'**au support de rembourrage (W) est associé un dispositif de guidage (A', K'), au moyen duquel ledit support est guidé lors d'un déplacement, et **en ce que** le dispositif de guidage (A', K') est formé d'une coulisse de guidage (K') et d'un axe (K') guidé à l'intérieur de ladite coulisse.

27. Siège de véhicule automobile selon la revendication 24 et 26, **caractérisé en ce que** le mécanisme de verrouillage (5) agit à l'état verrouillé sur le dispositif de guidage (A', K') pour bloquer un déplacement du support de rembourrage (W).

28. Siège de véhicule automobile selon la revendication 27, **caractérisé en ce que** le mécanisme de verrouillage (5) agit sur le dispositif de guidage (A', K') au moyen d'un levier de verrouillage logé de manière à pouvoir pivoter.

29. Siège de véhicule automobile selon l'une quelconque des revendications précédentes, **caractérisé en ce que** l'élément élastique (2) permet un rabattement du dossier (R) vers l'avant depuis la au moins une position d'utilisation en direction de la surface d'assise (F) d'un angle de pivotement défini sans que le dossier (R) ne provoque, par l'intermédiaire de l'organe de couplage (1), un déplacement du support de rembourrage (W).

30. Siège de véhicule automobile selon l'une quelconque des revendications précédentes, **caractérisé en ce que** le dossier (R) est logé de manière à pouvoir pivoter autour d'un axe (A).

31. Siège de véhicule automobile selon la revendication 30, **caractérisé en ce que** l'axe de pivotement est réalisé comme axe fixe.

32. Siège de véhicule automobile selon la revendication 30, **caractérisé en ce que** l'axe de pivotement (A) est réalisé comme un axe pouvant se déplacer lors du rabattement du dossier (R) vers l'avant.

33. Siège de véhicule automobile selon l'une quelconque des revendications précédentes, **caractérisé en ce qu'**au dossier (R) est associé un dispositif de réglage, au moyen duquel le dossier (R) peut être réglé dans une zone d'utilisation par pivotement dans différentes positions d'utilisation.

34. Siège de véhicule automobile selon la revendication 33, **caractérisé en ce que** lors d'un pivotement du dossier (R) à l'intérieur de la zone d'utilisation, l'élément élastique (2) est déformé par tension ou détente, de sorte qu'aucune action de l'organe de couplage (1) ne se produit sur le support de rembourrage (W).

35. Siège de véhicule automobile selon l'une quelconque des revendications précédentes, **caractérisé en ce que** lors d'un pivotement du dossier (R) depuis une position d'utilisation vers l'avant
- l'élément élastique (2) est déformé dans une première zone de pivotement, de sorte que l'organe de couplage (1) ne peut pas agir sur le baquet de siège (W),
- un mécanisme de verrouillage (5) du support de rembourrage (W) est déverrouillé dans une deuxième zone de pivotement s'y raccordant et
- l'organe de couplage (1) agit dans une troisième zone de pivotement s'y raccordant de telle manière sur le support de rembourrage (W) que celui-ci est déplacé.
